# FASCICULE DE BREVET EUROPEEN

(11) **EP 3 484 746 B1**
(45) Date de publication et mention de la délivrance du brevet: **14.10.2020**
(21) Numéro de dépôt: 17748825.1
(22) Date de dépôt: 10.07.2017
(51) Int. Cl.: B60N 2/58, B60N 2/70

(54) **PROCÉDÉ DE RÉALISATION D'UNE MATELASSURE DE SIÈGE DE VÉHICULE AUTOMOBILE**
VERFAHREN ZUR HERSTELLUNG EINER POLSTERUNG FÜR DEN SITZ EINES KRAFTFAHRZEUGES
METHOD FOR PRODUCING A MOTOR VEHICLE SEAT CUSHIONING

(30) Priorité: 12.07.2016 FR 1656696
(43) Date de publication de la demande: 22.05.2019
(73) Titulaire: TESCA France, 75008 Paris (FR)
(72) Inventeur: GEORGES, Laurent, 08190 ROIZY (FR); JESIERSKI, Nicolas, 75008 PARIS (FR)
(74) Mandataire: Sayettat, Julien Christian
(86) Numéro de dépôt international: PCT/FR2017/051888
(87) Numéro de publication internationale: WO 2018/011505

(56) Documents cités:
- WO-A1-2015/015131
- FR-A1- 2 935 290
- US-A- 4 784 437
- US-A1- 2010 201 178

## Description

L'invention concerne un procédé de réalisation d'une matelassure de siège de véhicule automobile, une matelassure ainsi obtenue et un siège comprenant une telle matelassure.

Il est connu de mettre en œuvre un procédé de réalisation d'une matelassure de siège de véhicule automobile, ledit procédé comprenant les étapes suivantes :
- prévoir une coiffe de revêtement comprenant un premier et un deuxième empiècement reliés l'un à l'autre par une couture définissant un talon pointant vers l'intérieur de ladite coiffe, ledit talon présentant une première face définie par ledit premier empiècement, une deuxième face définie par ledit deuxième empiècement et une tranche,
- prévoir un moule comprenant un premier et un deuxième demi-moule complémentaires actionnables en fermeture de manière à définir une cavité de moulage, ledit premier demi-moule définissant une première paroi et ledit deuxième demi-moule définissant une deuxième paroi de ladite cavité, ledit moule présentant les caractéristiques suivantes :
   ∘ ledit premier demi-moule comprend une première partie définissant une première zone de ladite première paroi et une deuxième partie définissant une deuxième zone de ladite première paroi,
   ∘ lesdites parties peuvent être écartées l'une de l'autre depuis une configuration rapprochée, dans laquelle elles sont séparées l'une de l'autre par une fente de largeur inférieure à l'épaisseur de ladite coiffe, de manière à permettre son pincement, vers une configuration écartée, dans laquelle elles sont séparées l'une de l'autre par un espace de largeur supérieure à l'épaisseur de ladite coiffe, de manière à permettre l'introduction de ladite coiffe au travers dudit espace,
   ∘ la géométrie de ladite fente correspond à celle de ladite couture,
   ∘ la géométrie desdits premier et deuxième empiècement correspond respectivement à celle desdites première et deuxième zone,
- disposer dans ledit moule ouvert ladite coiffe contre ladite première paroi, la face d'endroit de ladite couche de revêtement étant tournée vers ladite paroi,
- faire passer ladite coiffe à travers ledit espace, lesdites parties étant en configuration écartée, de sorte que ledit deuxième empiècement soit saillant de ladite cavité de moulage,
- actionner lesdites parties vers leur configuration rapprochée de manière à pincer ladite coiffe au niveau de ladite couture,
- injecter un mélange précurseur de mousse de polyuréthanne élastiquement compressible dans ladite cavité de moulage, de manière à former par expansion de ladite mousse un bloc de rembourrage,
- déplacer lesdites parties en configuration écartée et démouler la matelassure obtenue, ladite matelassure présentant ledit premier empiècement surmoulé par ledit bloc de rembourrage et ledit deuxième empiècement non surmoulé par ledit bloc de rembourrage.

Un tel agencement permet de disposer d'une matelassure dans laquelle le premier empiècement est surmoulé par le bloc de rembourrage et le deuxième empiècement est non surmoulé par ledit bloc.

On peut notamment prévoir que le premier empiècement soit disposé en zone centrale de la matelassure, formant un médaillon, le deuxième empiècement étant disposé au moins latéralement.

Dans ce cas, du fait de la non cohésion entre la mousse du bloc et le deuxième empiècement, on évite le risque de déchirure de la mousse en partie latérale du fait des entrées/sorties des passagers qui réalisent un pliage répété de ladite partie dans un sens et dans l'autre.

On précise ici que le talon d'une couture est constitué par les deux bordures résiduelles s'étendant entre ladite couture et les bords des empiècements qui s'étendent à sa proximité immédiate

Lors de la mise en œuvre d'un tel procédé, se pose au moins l'un des problèmes suivants :
- assurer une bonne étanchéité à la mousse au niveau du talon, afin d'éviter son passage vers la face d'aspect de la matelassure,
- garantir un bon positionnement du talon par rapport à l'interface entre les parties du premier demi-moule,
- réaliser une matelassure dont le bloc de rembourrage présente deux densités différentes en regard de chacun des empiècements, de sorte que la souplesse de ladite matelassure soit différente quand on passe d'un desdits empiècements à l'autre, la différence de souplesse se faisant de façon bien marquée quand on passe d'un desdits empiècements à l'autre,
- garantir une bonne accroche de la mousse du bloc en périphérie du premier empiècement, afin d'éviter un arrachement suite à une utilisation répétée de la matelassure.

L'invention a pour but de résoudre au moins un de ces problèmes techniques.

A cet effet, et selon un premier aspect, l'invention propose un procédé de réalisation d'une matelassure de siège de véhicule automobile, ledit procédé comprenant les étapes suivantes :
- prévoir une coiffe de revêtement comprenant un premier et un deuxième empiècement reliés l'un à l'autre par une couture définissant un talon pointant vers l'intérieur de ladite coiffe, ledit talon présentant une première face définie par ledit premier empiècement, une deuxième face définie par ledit deuxième empiècement et une tranche,
- prévoir un moule comprenant un premier et un deuxième demi-moule complémentaires actionnables en fermeture de manière à définir une cavité de moulage, ledit premier demi-moule définissant une première paroi et ledit deuxième demi-moule définissant une deuxième paroi de ladite cavité, ledit moule présentant les caractéristiques suivantes :
   ∘ ledit premier demi-moule comprend une première partie définissant une première zone de ladite première paroi et une deuxième partie définissant une deuxième zone de ladite première paroi,
   ∘ lesdites parties peuvent être écartées l'une de l'autre depuis une configuration rapprochée, dans laquelle elles sont séparées l'une de l'autre par une fente de largeur inférieure à l'épaisseur de ladite coiffe, de manière à permettre son pincement, vers une configuration écartée, dans laquelle elles sont séparées l'une de l'autre par un espace de largeur supérieure à l'épaisseur de ladite coiffe, de manière à permettre l'introduction de ladite coiffe au travers dudit espace,
   ∘ la géométrie de ladite fente correspond à celle de ladite couture,
   ∘ la géométrie desdits premier et deuxième empiècement correspond respectivement à celle desdites première et deuxième zones,
- disposer dans ledit moule ouvert ladite coiffe contre ladite première paroi, la face d'endroit de ladite couche de revêtement étant tournée vers ladite paroi,
- faire passer ladite coiffe à travers ledit espace, lesdites parties étant en configuration écartée, de sorte que ledit deuxième empiècement soit saillant de ladite cavité de moulage,
- actionner lesdites parties vers leur configuration rapprochée de manière à pincer ladite coiffe au niveau de ladite couture,
- injecter un mélange précurseur de mousse de polyuréthanne élastiquement compressible dans ladite cavité de moulage, de manière à former par expansion de ladite mousse un bloc de rembourrage,
- déplacer lesdites parties en configuration écartée et démouler la matelassure obtenue, ladite matelassure présentant ledit premier empiècement surmoulé par ledit bloc de rembourrage et ledit deuxième empiècement non surmoulé par ledit bloc de rembourrage,
ledit procédé présentant en outre les caractéristiques suivantes :
- ladite première partie est pourvue d'une zone périphérique s'amenuisant à mesure que l'on va vers son bord libre de manière à présenter une section en forme de bec pointant vers ladite deuxième partie,
- ladite deuxième partie est pourvue d'un muret périphérique en forme de lame, ledit muret étant saillant vers l'intérieur de ladite cavité de moulage,
- ledit talon est disposé, lors de la mise en place de ladite coiffe dans ledit moule, de sorte que ladite couture vienne à proximité dudit bord libre, lesdits empiècements s'étendant respectivement de part et d'autre de ladite zone, ladite deuxième face s'appuyant contre ledit muret, ledit muret s'étendant au moins jusqu'en extrémité libre dudit talon, afin que ledit talon soit surmoulé, par ladite mousse une fois expansée, sur ladite tranche et sur ladite première face, ladite deuxième face étant sensiblement exempte de mousse.

Avec l'agencement proposé, on obtient les résultats suivants :
- on assure une bonne étanchéité à la mousse au niveau de la couture, ceci du fait que le talon est plaqué contre le muret, ce qui évite le passage de mousse entre les deux,
- le bon positionnement du talon par rapport à l'interface entre les parties du premier demi-moule est assuré du fait que la couture vient à proximité du bord libre de la zone périphérique, les empiècements s'étendant respectivement de part et d'autre de ladite zone
- on peut aisément réaliser une matelassure dont le bloc de rembourrage présente deux densités différentes en regard de chacun des empiècements, la différence de souplesse se faisant de façon bien marquée quand on passe d'un desdits empiècements à l'autre puisque le talon est supporté par le muret qui évite un mélange des mélanges précurseurs de mousse de différentes densités en phase initiale d'expansion, le contact entre les différentes mousses se faisant seulement après un certain taux d'expansion,
- enfin, on garantit une très bonne accroche de la mousse du bloc en périphérie du premier empiècement, ceci du fait que le talon est surmoulé par la mousse du bloc sur sa première face et sur sa tranche.

Selon d'autres aspects, l'invention propose une matelassure ainsi obtenue et un siège comprenant une telle matelassure.

D'autres particularités et avantages de l'invention apparaîtront dans la description qui suit, faite en référence aux figures jointes, dans lesquelles :
- la figure 1 est une vue schématique en perspective d'une matelassure selon une réalisation,
- la figure 2 est une vue schématique en coupe partielle d'une matelassure disposée dans le moule avant son démoulage, les parties du premier demi-moule étant en configuration rapprochée.

En référence aux figures, on décrit un procédé de réalisation d'une matelassure 1 de siège de véhicule automobile, ledit procédé comprenant les étapes suivantes :
- prévoir une coiffe 2 de revêtement comprenant un premier 3 et un deuxième 4 empiècement reliés l'un à l'autre par une couture 5 définissant un talon 6 pointant vers l'intérieur de ladite coiffe, ledit talon présentant une première face 30 définie par ledit premier empiècement, une deuxième face 28 définie par ledit deuxième empiècement et une tranche 29,
- prévoir un moule comprenant un premier 9 et un deuxième demi-moule, ledit deuxième demi-moule étant non représenté, complémentaires actionnables en fermeture de manière à définir une cavité 11 de moulage, ledit premier demi-moule définissant une première paroi 12 et ledit deuxième demi-moule définissant une deuxième paroi, non représentée, de ladite cavité, ledit moule présentant les caractéristiques suivantes :
   ∘ ledit premier demi-moule comprend une première partie 14 définissant une première zone 15 de ladite première paroi et une deuxième partie 16 définissant une deuxième zone 17 de ladite première paroi,
   ∘ lesdites parties peuvent être écartées l'une de l'autre depuis une configuration rapprochée, dans laquelle elles sont séparées l'une de l'autre par une fente 18 de largeur inférieure à l'épaisseur de ladite coiffe, de manière à permettre son pincement, vers une configuration écartée, dans laquelle elles sont séparées l'une de l'autre par un espace de largeur supérieure à l'épaisseur de ladite coiffe, de manière à permettre l'introduction de ladite coiffe au travers dudit espace,
   ∘ la géométrie de ladite fente correspond à celle de ladite couture,
   ∘ la géométrie desdits premier et deuxième empiècement correspond respectivement à celle desdites première et deuxième zone,
- disposer dans ledit moule ouvert ladite coiffe contre ladite première paroi, la face d'endroit de ladite couche de revêtement étant tournée vers ladite paroi,
- faire passer ladite coiffe à travers ledit espace, lesdites parties étant en configuration écartée, de sorte que ledit deuxième empiècement soit saillant de ladite cavité de moulage,
- actionner lesdites parties vers leur configuration rapprochée de manière à pincer ladite coiffe au niveau de ladite couture,
- injecter un mélange précurseur de mousse de polyuréthanne élastiquement compressible dans ladite cavité de moulage, de manière à former par expansion de ladite mousse un bloc 20 de rembourrage,
- déplacer lesdites parties en configuration écartée et démouler la matelassure obtenue, ladite matelassure présentant ledit premier empiècement surmoulé par ledit bloc de rembourrage et ledit deuxième empiècement non surmoulé par ledit bloc de rembourrage,
ledit procédé présentant en outre les caractéristiques suivantes :
- ladite première partie est pourvue d'une zone 26 périphérique s'amenuisant à mesure que l'on va vers son bord libre 27 de manière à présenter une section en forme de bec pointant vers ladite deuxième partie,
- ladite deuxième partie est pourvue d'un muret 21 périphérique en forme de lame, ledit muret étant saillant vers l'intérieur de ladite cavité de moulage,
- ledit talon est disposé, lors de la mise en place de ladite coiffe dans ledit moule, de sorte que ladite couture vienne à proximité dudit bord libre, lesdits empiècements s'étendant respectivement de part et d'autre de ladite zone, ladite deuxième face s'appuyant contre ledit muret, ledit muret s'étendant au moins jusqu'en extrémité libre dudit talon, afin que ledit talon soit surmoulé, par ladite mousse une fois expansée, sur ladite tranche et sur ladite première face, ladite deuxième face étant sensiblement exempte de mousse.

Selon une réalisation, le muret 21 présente une hauteur 31 comprise entre 10 et 15 mm, étant notamment de l'ordre de 12 mm, ladite hauteur étant mesurée à partir d'une ligne 32 faisant face au bord libre 27.

Selon la réalisation représentée, le muret 21 s'étend au-delà de l'extrémité libre du talon 6.

Selon la réalisation représentée :
- le premier empiècement 3 comprend une couche de revêtement 7 et une sous-couche 8 élastiquement compressible à base de mousse, notamment de polyuréthanne,
- après avoir actionné les première 14 et deuxième 16 partie en configuration rapprochée de manière à pincer la coiffe 2 au niveau de la couture 5, on dépose sur ladite sous-couche un film, non représenté, se dégradant au contact de la mousse du bloc 20 de rembourrage en cours d'expansion, de manière à permettre un surmoulage dudit empiècement par ladite mousse tout en empêchant sensiblement la pénétration de ladite mousse dans l'épaisseur de ladite sous-couche.

Une telle façon de procéder permet d'obtenir, du fait de l'effet de barrière à la mousse exercé par le film jusqu'à sa dégradation, une matelassure 1 dont la sous-couche 8 est sensiblement exempte de mousse qui formerait barrière d'étanchéité.

La sous-couche 8 garde donc sa perméabilité, ce qui est bénéfique pour le confort hygrothermique de la matelassure 1.

Selon une réalisation, un premier mélange précurseur de mousse est injecté en regard du premier empiècement 3 et un deuxième mélange précurseur de mousse est injecté en regard du deuxième empiècement 4, de manière à obtenir un bloc 20 de rembourrage présentant deux densités différentes en regard de chacun desdits empiècements, de sorte que la souplesse de la matelassure 1 soit différente quand on passe d'un desdits empiècements à l'autre.

On a vu avant en quoi la présence du muret 21 permet d'obtenir une séparation franche entre les mousses de différente souplesse.

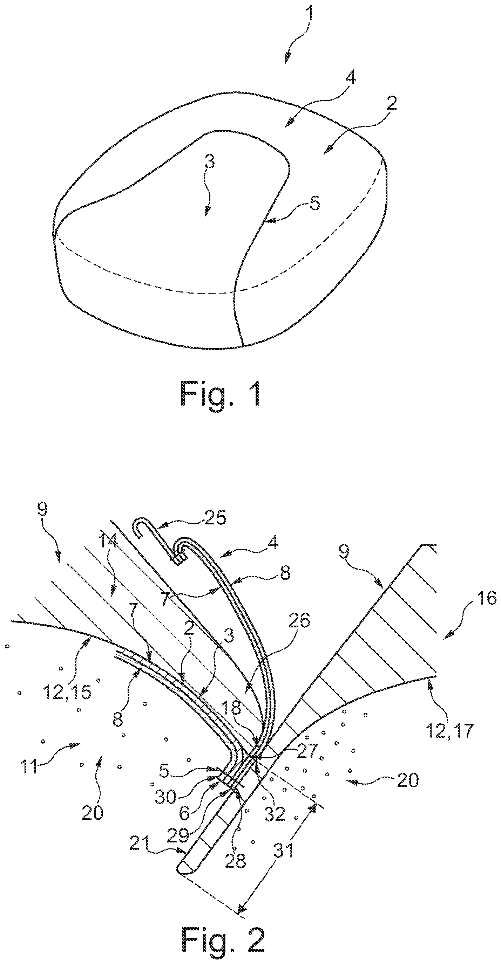

Selon la réalisation représentée en figure 1, le deuxième empiècement 4 présente une forme générale de U, le premier empiècement 3 s'inscrivant sensiblement à l'intérieur dudit U, la mousse du bloc 20 de rembourrage étant plus dense en regard dudit deuxième empiècement qu'en regard dudit premier empiècement.

On dispose ainsi d'une matelassure 1 permettant notamment d'assurer latéralement un maintien ferme du passager.

On décrit à présent une matelassure 1 réalisée par un tel procédé, ladite matelassure comprenant :
- un bloc 20 de rembourrage en mousse élastiquement compressible,
- une coiffe 2 de revêtement dudit bloc de rembourrage, ladite coiffe comprenant un premier 3 et un deuxième 4 empiècement reliés l'un à l'autre par une couture 5 définissant un talon 6 pointant vers l'intérieur de ladite coiffe, ledit premier empiècement étant surmoulé par ledit bloc de rembourrage et ledit deuxième empiècement étant non surmoulé par ledit bloc de rembourrage,
la mousse dudit bloc de rembourrage surmoulant le talon 6 sur sa première face 30 et sur sa tranche 29, sa deuxième face 28 étant sensiblement exempte de mousse.

Selon une réalisation, la matelassure 1 comprend un bloc 20 de rembourrage présentant deux densités différentes en regard de chacun des empiècements 3,4, de sorte que la souplesse de ladite matelassure soit différente quand on passe d'un desdits empiècements à l'autre.

On décrit enfin, de façon non représentée, un siège de véhicule automobile comprenant une matelassure 1 réalisée par le procédé sus-décrit, ladite matelassure étant montée sur une armature dudit siège, le deuxième empiècement 4 étant pourvu de moyens d'accrochage 25 périphériques à ladite armature - ici sous forme de profilés cousus sur ledit empiècement - de manière à être tendu contre le bloc 20 de rembourrage.

## Revendications

1. Procédé de réalisation d'une matelassure (1) de siège de véhicule automobile, ledit procédé comprenant les étapes suivantes :
• prévoir une coiffe (2) de revêtement comprenant un premier (3) et un deuxième (4) empiècement reliés l'un à l'autre par une couture (5) définissant un talon (6) pointant vers l'intérieur de ladite coiffe, ledit talon présentant une première face (30) définie par ledit premier empiècement, une deuxième face (28) définie par ledit deuxième empiècement et une tranche (29),
• prévoir un moule comprenant un premier (9) et un deuxième demi-moule complémentaires actionnables en fermeture de manière à définir une cavité (11) de moulage, ledit premier demi-moule définissant une première paroi (12) et ledit deuxième demi-moule définissant une deuxième paroi de ladite cavité, ledit moule présentant les caractéristiques suivantes :
∘ ledit premier demi-moule comprend une première partie (14) définissant une première zone (15) de ladite première paroi et une deuxième partie (16) définissant une deuxième zone (17) de ladite première paroi,
∘ lesdites parties peuvent être écartées l'une de l'autre depuis une configuration rapprochée, dans laquelle elles sont séparées l'une de l'autre par une fente (18) de largeur inférieure à l'épaisseur de ladite coiffe, de manière à permettre son pincement, vers une configuration écartée, dans laquelle elles sont séparées l'une de l'autre par un espace de largeur supérieure à l'épaisseur de ladite coiffe, de manière à permettre l'introduction de ladite coiffe au travers dudit espace,
∘ la géométrie de ladite fente correspond à celle de ladite couture,
∘ la géométrie desdits premier et deuxième empiècement correspond respectivement à celle desdites première et deuxième zone,
• disposer dans ledit moule ouvert ladite coiffe contre ladite première paroi, la face d'endroit de ladite couche de revêtement étant tournée vers ladite paroi,
• faire passer ladite coiffe à travers ledit espace, lesdites parties étant en configuration écartée, de sorte que ledit deuxième empiècement soit saillant de ladite cavité de moulage,
• actionner lesdites parties vers leur configuration rapprochée de manière à pincer ladite coiffe au niveau de ladite couture,
• injecter un mélange précurseur de mousse de polyuréthanne élastiquement compressible dans ladite cavité de moulage, de manière à former par expansion de ladite mousse un bloc (20) de rembourrage,
• déplacer lesdites parties en configuration écartée et démouler la matelassure obtenue, ladite matelassure présentant ledit premier empiècement surmoulé par ledit bloc de rembourrage et ledit deuxième empiècement non surmoulé par ledit bloc de rembourrage,
ledit procédé étant **caractérisé en ce que** :
• ladite première partie est pourvue d'une zone (26) périphérique s'amenuisant à mesure que l'on va vers son bord libre (27) de manière à présenter une section en forme de bec pointant vers ladite deuxième partie,
• ladite deuxième partie est pourvue d'un muret (21) périphérique en forme de lame, ledit muret étant saillant vers l'intérieur de ladite cavité de moulage,
• ledit talon est disposé, lors de la mise en place de ladite coiffe dans ledit moule, de sorte que ladite couture vienne à proximité dudit bord libre, lesdits empiècements s'étendant respectivement de part et d'autre de ladite zone, ladite deuxième face s'appuyant contre ledit muret, ledit muret s'étendant au moins jusqu'en extrémité libre dudit talon, afin que ledit talon soit surmoulé, par ladite mousse une fois expansée, sur ladite tranche et sur ladite première face, ladite deuxième face étant sensiblement exempte de mousse.

2. Procédé selon la revendication 1, **caractérisé en ce que** le muret (21) présente une hauteur (31) comprise entre 10 et 15 mm, étant notamment de l'ordre de 12 mm, ladite hauteur étant mesurée à partir d'une ligne (32) faisant face au bord libre (27).

3. Procédé selon l'une des revendications 1 ou 2, **caractérisé en ce que** le muret (21) s'étend au-delà de l'extrémité libre du talon (6).

4. Procédé selon l'une quelconque des revendications 1 à 3, **caractérisé en ce que** :
• le premier empiècement (3) comprend une couche de revêtement (7) et une sous-couche (8) élastiquement compressible à base de mousse, notamment de polyuréthanne,
• après avoir actionné les première (14) et deuxième (16) partie en configuration rapprochée de manière à pincer la coiffe au niveau de la couture (5), on dépose sur ladite sous-couche un film se dégradant au contact de la mousse du bloc (20) de rembourrage en cours d'expansion, de manière à permettre un surmoulage dudit empiècement par ladite mousse tout en empêchant sensiblement la pénétration de ladite mousse dans l'épaisseur de ladite sous-couche.

5. Procédé selon l'une quelconque des revendications 1 à 4, **caractérisé en ce qu'**un premier mélange précurseur de mousse est injecté en regard du premier empiècement (3) et un deuxième mélange précurseur de mousse est injecté en regard du deuxième empiècement (4), de manière à obtenir un bloc (20) de rembourrage présentant deux densités différentes en regard de chacun desdits empiècements, de sorte que la souplesse de ladite matelassure soit différente quand on passe d'un desdits empiècements à l'autre.

6. Procédé selon la revendication 5, **caractérisé en ce que** le deuxième empiècement (4) présente une forme générale de U, le premier empiècement (3) s'inscrivant sensiblement à l'intérieur dudit U, la mousse du bloc (20) de rembourrage étant plus dense en regard dudit deuxième empiècement qu'en regard dudit premier empiècement.

7. Matelassure (1) réalisée par un procédé selon l'une quelconque des revendications 1 à 6, ladite matelassure comprenant :
• un bloc (20) de rembourrage en mousse élastiquement compressible,
• une coiffe (2) de revêtement dudit bloc de rembourrage, ladite coiffe comprenant un premier (3) et un deuxième (4) empiècement reliés l'un à l'autre par une couture (5) définissant un talon (6) pointant vers l'intérieur de ladite coiffe, ledit premier empiècement étant surmoulé par ledit bloc de rembourrage et ledit deuxième empiècement étant non surmoulé par ledit bloc de rembourrage,
ladite matelassure étant **caractérisée en ce que** la mousse dudit bloc de rembourrage surmoule le talon (6) sur sa première face (30) et sur sa tranche (29), sa deuxième face (28) étant sensiblement exempte de mousse.

8. Matelassure selon la revendication 7, quand elle se rattache à la revendication 5, **caractérisée en ce qu'**elle comprend un bloc (20) de rembourrage présentant deux densités différentes en regard de chacun des empiècements (3,4), de sorte que la souplesse de ladite matelassure soit différente quand on passe d'un desdits empiècements à l'autre.

9. Siège de véhicule automobile comprenant une matelassure selon l'une des revendications 7 ou 8, ladite matelassure étant montée sur une armature dudit siège, le deuxième empiècement (4) étant pourvu de moyens d'accrochage (25) périphériques à ladite armature de manière à être tendu contre le bloc (20) de rembourrage.

## Patentansprüche

1. Verfahren zur Herstellung einer Polsterung (1) eines Kraftfahrzeugsitzes, wobei das Verfahren die folgenden Schritte umfasst:
• Vorsehen einer Überzugsabdeckung (2), umfassend einen ersten (3) und einen zweiten (4) Einsatz, die durch eine Naht (5) miteinander verbunden sind, wodurch ein Absatz (6) definiert wird, der zum Inneren der Abdeckung weist, wobei der Absatz eine erste Seite (30), die von dem ersten Einsatz definiert wird, eine zweite Seite (28), die von dem zweiten Einsatz definiert wird, und einen Teilabschnitt (29) aufweist,
• Vorsehen einer Form, umfassend eine erste (9) und eine zweite komplementäre Formhälfte, die beim Schließen antreibbar sind, um einen Formungshohlraum (11) zu definieren, wobei die erste Formhälfte eine erste Wand (12) definiert und die zweite Formhälfte eine zweite Wand des Hohlraums definiert, wobei die Form die folgenden Charakteristika aufweist:
∘ die erste Formhälfte umfasst einen ersten Teil (14), der eine erste Zone (15) der ersten Wand definiert, und einen zweiten Teil (16), der eine zweite Zone (17) der ersten Wand definiert,
∘ die Teile können von einer angenäherten Konfiguration, in der sie durch einen Spalt (18) mit einer Breite, die kleiner als die Dicke der Abdeckung ist, voneinander getrennt sind, um ihr Quetschen zu ermöglichen, zu einer entfernten Konfiguration, in der sie durch einen Raum mit einer Breite, die größer als die Dicke der Abdeckung ist, voneinander getrennt sind, um das Einbringen der Abdeckung durch den Raum zu ermöglichen, voneinander entfernt werden,
∘ die Geometrie des Spalts entspricht der der Naht,
∘ die Geometrie des ersten und des zweiten Einsatzes entspricht der der ersten bzw. der zweiten Zone,
• Anordnen der Abdeckung in der offenen Form gegen die erste Wand, wobei die Unterseite der Überzugsschicht zu der Wand gewendet wird,
• Hindurchtretenlassen der Abdeckung durch den Raum, wobei die Teile in einer entfernten Konfiguration sind, so dass der zweite Einsatz von dem Formungshohlraum hervorsteht,
• Antreiben der Teile zu ihrer angenäherten Konfiguration, um die Abdeckung auf Höhe der Naht zu quetschen,
• Spritzen eines elastisch komprimierbaren Polyurethanschaumstoff-Vorläufergemischs in den Formungshohlraum, um durch Expansion des Schaumstoffs einen Polsterblock (20) zu bilden,
• Verlagern der Teile in eine entfernte Konfiguration und Entformen der erhaltenen Polsterung, wobei die Polsterung den ersten Einsatz, der durch den Polsterblock umspritzt ist, und den zweiten Einsatz, der nicht durch den Polsterblock umspritzt ist, aufweist,
wobei das Verfahren **dadurch gekennzeichnet ist, dass**:
• der erste Teil mit einer umlaufenden Zone (26) versehen ist, die zu ihrem freien Rand (27) abnimmt, um einen Abschnitt in der Form einer Nase aufzuweisen, die zu dem zweiten Teil weist,
• der zweite Teil mit einer umlaufenden Teilwand (21) in der Form einer Schneide versehen ist, wobei die Teilwand zum Inneren des Formungshohlraums hervorsteht,
• der Absatz bei Platzierung der Abdeckung in der Form angeordnet wird, so dass die Naht in die Nähe des freien Rands kommt, wobei die Einsätze sich jeweils auf beiden Seiten der Zone erstrecken, wobei die zweite Seite gegen die Teilwand aufliegt, wobei die Teilwand sich zumindest bis zum freien Ende des Absatzes erstreckt, damit der Absatz durch den Schaumstoff, sobald er expandiert ist, auf dem Teilabschnitt und auf der ersten Seite umspritzt ist, wobei die zweite Seite im Wesentlichen frei von Schaumstoff ist.

2. Verfahren nach Anspruch 1, **dadurch gekennzeichnet, dass** die Teilwand (21) eine Höhe (31) aufweist, die zwischen 10 und 15 mm liegt, insbesondere in der Größenordnung von 12 mm ist, wobei die Höhe von einer Linie (32) gemessen wird, die dem freien Rand (27) zugewandt ist.

3. Verfahren nach einem der Ansprüche 1 oder 2, **dadurch gekennzeichnet, dass** die Teilwand (21) sich über das freie Ende des Absatzes (6) hinaus erstreckt.

4. Verfahren nach einem der Ansprüche 1 bis 3, **dadurch gekennzeichnet, dass**:
• der erste Einsatz (3) eine Überzugsschicht (7) und eine elastisch komprimierbare Unterschicht (8) auf Schaumstoffbasis, insbesondere Polyurethanbasis umfasst,
• nachdem der erste (14) und der zweite (16) Teil in eine angenäherte Konfiguration angetrieben wurden, um die Abdeckung auf Höhe der Naht (5) zu quetschen, eine Folie, die bei Kontakt mit dem Schaumstoff des Polsterblocks (20) im Laufe der Expansion zerfällt, auf der Unterschicht angeordnet wird, um ein Umspritzen des Einsatzes durch den Schaumstoff zu ermöglichen, wobei im Wesentlichen das Eindringen des Schaumstoffs in die Dicke der Unterschicht verhindert wird.

5. Verfahren nach einem der Ansprüche 1 bis 4, **dadurch gekennzeichnet, dass** ein erstes Schaumstoff-Vorläufergemisch in Bezug auf den ersten Einsatz (3) gespritzt wird und ein zweites Schaumstoff-Vorläufergemisch in Bezug auf den zweiten Einsatz (4) gespritzt wird, um einen Polsterblock (20) zu erhalten, der zwei unterschiedliche Dichten in Bezug auf jeden der Einsätze aufweist, so dass die Weichheit der Polsterung unterschiedlich ist, wenn von einem der Einsätze zum anderen vorgegangen wird.

6. Verfahren nach Anspruch 5, **dadurch gekennzeichnet, dass** der zweite Einsatz (4) eine allgemeine U-Form aufweist, wobei der erste Einsatz (3) im Wesentlichen im Inneren des U aufgenommen ist, wobei der Schaumstoff des Polsterblocks (20) in Bezug auf den zweiten Einsatz dichter ist als in Bezug auf den ersten Einsatz.

7. Polsterung (1), die durch ein Verfahren nach einem der Ansprüche 1 bis 6 hergestellt wird, wobei die Polsterung umfasst:
• einen Polsterblock (20) aus elastisch komprimierbarem Schaumstoff,
• eine Überzugsabdeckung (2) des Polsterblocks, wobei die Abdeckung einen ersten (3) und einen zweiten (4) Einsatz umfasst, die durch eine Naht (5) miteinander verbunden sind, wodurch ein Absatz (6) definiert wird, der zum Inneren der Abdeckung weist, wobei der erste Einsatz durch den Polsterblock umspritzt wird und der zweite Einsatz nicht durch den Polsterblock umspritzt wird,
wobei die Polsterung **dadurch gekennzeichnet ist, dass** der Schaumstoff des Polsterblocks den Absatz (6) auf seiner ersten Seite (30) und auf seinem Teilabschnitt (29) umspritzt, wobei seine zweite Seite (28) im Wesentlichen frei von Schaumstoff ist.

8. Polsterung nach Anspruch 7, wenn er mit Anspruch 5 zusammenhängt, **dadurch gekennzeichnet, dass** sie einen Polsterblock (20) umfasst, der zwei unterschiedliche Dichten in Bezug auf jeden der Einsätze (3, 4) aufweist, so dass die Weichheit der Polsterung unterschiedlich ist, wenn von einem der Einsätze zum anderen vorgegangen wird.

9. Kraftfahrzeugsitz, umfassend eine Polsterung nach einem der Ansprüche 7 oder 8, wobei die Polsterung auf einem Gestell des Sitzes montiert wird, wobei der zweite Einsatz (4) mit umlaufenden Mitteln (25) zum Einrasten mit dem Gestell versehen ist, um gegen den Polsterblock (20) gespannt zu werden.

## Claims

1. Method for producing a motor vehicle seat cushioning (1), said method comprising the following steps:
• providing a cladding cover (2) comprising a first (3) and a second (4) yoke connected to one another by a seam (5) defining a heel (6) pointing towards the inside of said cover, said heel having a first face (30) defined by said first yoke, a second face (28) defined by said second yoke and an edge (29),
• providing a mould comprising complementary first (9) and second half moulds actuatable for closure so as to define a moulding cavity (11), said first half mould defining a first wall (12) and said second half mould defining a second wall of said cavity, said mould having the following characteristics:
∘ said first half mould comprises a first part (14) defining a first zone (15) of said first wall and a second part (16) defining a second zone (17) of said first wall,
∘ said parts may be separated from one another from a close-together configuration, in which they are separated from one another by a slot (18) with a width less than the thickness of said cover, so as to enable it to be pinched, towards a separated configuration, in which they are separated from one another by a space with a width greater than the thickness of said cover, so as to allow the introduction of said cover through said space,
∘ the geometry of said slot corresponds to that of said seam,
∘ the geometry of said first and second yokes corresponds respectively to that of said first and second zones,
• disposing, in said open mould, said cover against said first wall, the right face of said cladding cover being turned towards said wall,
• passing said cover through said space, said parts being in separated configuration, so that said second yoke projects from said moulding cavity,
• actuating said parts towards the close-together configuration thereof so as to pinch said cover at said seam,
• injecting an elastically compressible mixture that is a polyurethane foam precursor into said moulding cavity, so as to form a padding block (20) by expansion of said foam,
• moving said parts into the separated configuration and removing the cushioning obtained from said mould, said cushioning having said first yoke overmoulded by said padding block and said second yoke not overmoulded by said padding block,
said method being **characterised in that**:
• said first part is provided with a peripheral zone (26) growing smaller on going towards the free edge (27) thereof so as to have a cross section in the form of a beak pointing towards said second part,
• said second part is provided with a peripheral low wall (21) in the form of a blade, said low wall projecting towards the inside of said moulding cavity,
• said heel is disposed, when said cover is placed in said mould, so that said seam comes in proximity to said free edge, said yokes extending respectively on either side of said zone, said second face bearing against said low wall, said low wall extending at least as far as the free end of said heel, so that said heel is overmoulded, by said foam once expanded, on said edge and on said first face, said second face being substantially free from foam.

2. Method according to claim 1, **characterised in that** the low wall (21) has a height (31) of between 10 and 15 mm, being in particular around 12 mm, said height being measured from a line (32) facing the free edge (27).

3. Method according to one of claims 1 or 2, **characterised in that** the low wall (21) extends beyond the free end of the heel (6).

4. Method according to any one of claims 1 to 3, **characterised in that**:
• the first yoke (3) comprises a cladding layer (7) and an elastically compressible underlayer (8) based on foam, in particular polyurethane,
• after having actuated the first (14) and second (16) parts in the close-together configuration so as to pinch the cover at the seam (5), a film degrading in contact with the foam of the padding block (20) during expansion is deposited on said sublayer so as to allow overmoulding of said yoke by said foam while substantially preventing penetration of said foam into the thickness of said underlayer.

5. Method according to any one of claims 1 to 4, **characterised in that** a first foam-precursor mixture is injected facing the first yoke (3) and a second foam-precursor mixture is injected facing the second yoke (4), so as to obtain a padding block (20) having two different densities facing each of said yokes, so that the flexibility of said cushioning is different when moving from one of said yokes to the other.

6. Method according to claim 5, **characterised in that** the second yoke (4) is roughly U-shaped, the first yoke (3) fitting substantially inside said U, the foam of the padding block (20) being denser facing said second yoke than facing said first yoke.

7. Cushioning (1) produced by a method according to any one of claims 1 to 6, said cushioning comprising:
• a padding block (20) made from elastically compressible foam,
• a cover (2) cladding said padding block, said cover comprising first (3) and second (4) yokes connected to one another by a seam (5) defining a heel (6) pointing towards the inside of said cover, said first yoke being overmoulded by said padding block and said second yoke being not overmoulded by said padding block,
said cushioning being **characterised in that** the foam of said padding block overmoulds the heel (6) on the first face (30) thereof and on the edge (29) thereof, the second face (28) thereof being substantially free from foam.

8. Cushioning according to claim 7, when it is attached to claim 5, **characterised in that** it comprises a padding block (20) having two different densities opposite each of the yokes (3, 4), so that the flexibility of said cushioning is different when passing from one of said yokes to the other.

9. Motor vehicle seat comprising cushioning according to one of claims 7 or 8, said cushioning being mounted on a frame of said seat, the second yoke (4) being provided with peripheral means (25) for attachment to said frame so as to be tensioned against the padding block (20).
